Europäisches Patentamt

European Patent Office

Office européen des brevets

(19)

(11) Publication number:

0 319 286
A2

(12) **EUROPEAN PATENT APPLICATION**

(21) Application number: 88311371.4

(22) Date of filing: 30.11.88

(51) Int. Cl.⁴: **G02F 7/00**

(30) Priority: 30.11.87 GB 8727961
18.08.88 GB 8819681

(43) Date of publication of application:
07.06.89 Bulletin 89/23

(84) Designated Contracting States:
AT BE CH DE ES FR GB GR IT LI LU NL SE

(71) Applicant: PLESSEY OVERSEAS LIMITED
Vicarage Lane
Ilford Essex IGI 4AQ(GB)

(72) Inventor: Walker, Robert Graham
30 Broadmead Avenue
Northampton, NN3 2QY(GB)
Inventor: Carter, Andrew
32A Stoke Road
Blisworth Northants, NN7 3BZ(GB)

(74) Representative: Elliott, Frank Edward
The Plessey Company plc. Intellectual
Property Department Vicarage Lane
Ilford, Essex IG1 4AQ(GB)

(54) Analogue-to-digital converter.

(57) The invention provides an optical analogue-to-digital converter (ADC) of the Mach-Zehnder interferometer type but in which the maximum electrode length (LSB output) is comprised of the summed length of all the electrodes, the latter forming a binary series of lengths.

EP 0 319 286 A2

ANALOGUE-TO-DIGITAL CONVERTER

This invention relates to analogue-to-digital converters (ADC$_s$) which utilise an electro-optical effect in an interferometric optical waveguide device preferably formed of GaAs/AlGaAs materials.

Devices of the above kind are known (see, for example, Taylor H.F. "An Electro-Optic Analog to Digital Converter" Proc. IEEE, 1975 Vol 63 pp1524-1525; Taylor H.F. "An Optical Analog-to-Digital Converter - Design and Analysis" IEEE J. Quant. Electron. 1979 QE-15 pp210-216; and Becker R.A., Woodward C.E., Leonberger F.J. "2-bit 1 G Sample/s Electro-Optic Guided-Wave Analogue-to-Digital Converter System". Electron. Lett. 1983, 19, pp332-33).

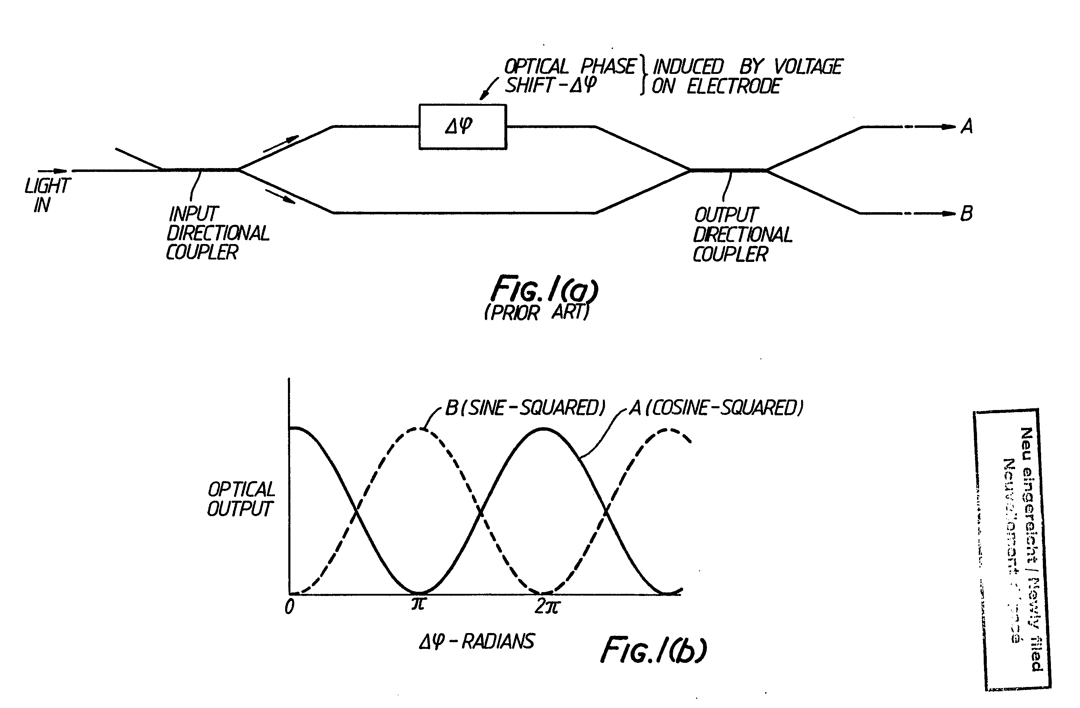

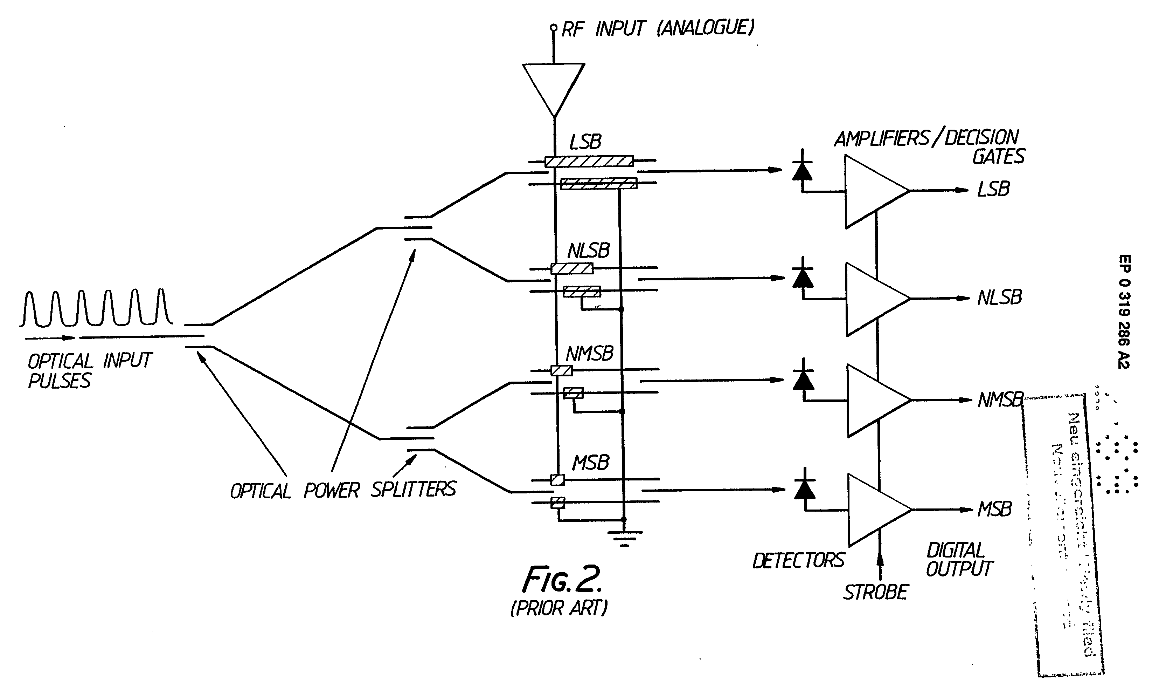

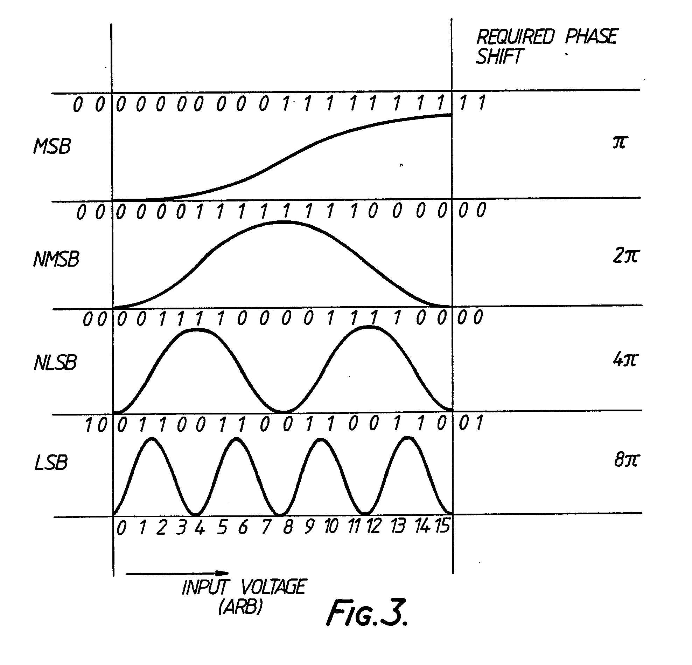

These ADC device are based on optical waveguide Mach-Zehnder interferometers (Fig. 1.). The Basic 4-port, Mach-Zehnder interferometer configuration of optical waveguides is well known. When close together, the wave guides are coupled and optical power transfer occurs. Coupler length is designed for equal division between the two paths. Diverging the guides decouples them. The distribution of output light between ports A and B is a sine/cosine-squared function of the relative phase difference $\Delta\phi$. This is induced using the electro-optic effect in which case the periodic output/voltage response has a period (in volts) inversely proportional to the electrode length. Thus, a rank of N such interferometers (side-by-side) with electrode lengths in a 1, 2, 4, 8      2 [N-1] sequence (Fig. 2), with electrodes paralelly connected, produces outputs which, when thresholded at 50% levels, give an N-bit, Gray-Code digital representation of the common electrode voltage (Fig. 3). Voltage sampling is achieved by using an optical input consisting of a periodic train of short pulses, produced, for example, by mode-locking a semiconductor laser. This is divided between the N interferometers using a "tree" structure of waveguide y-splitters. Symmetrical 3-guide couplers, 2-guide couplers (as in figure 1), or Y-junctions may be used.

Devices of the foregoing types inherently have many disadvantages among which may be cited:-

a. bandwidth is capacitance limited to about half that due to the longest electrode alone.

b. The length of flawless waveguide requires is N-times that of a single interferometer and may be many centimeters.

c. Interconnection of electrodes is topologically awkward and leads to parasitic inductance which may further reduce bandwidth.

It is an object of the present invention to provide an improved optical analogue-to-digital converter.

According to the present invention, there is provided an optical analogue-to-digital converter comprising an optical waveguide Mach-Zehnder interferometer whereto optical pulses are fed, a pair of electrodes whereby an analogue signal may be applied across the waveguide, each electrode of the pair comprising a plurality of plate sections, operating in pairs, of lengths varying according to a binary series, and, for each pair of plates, at least an upstream and a downstream optical coupler permitting the input optical pulses to be split and then recombined and tapped, the tapped outputs corresponding to the bit order of the plates in the binary series.

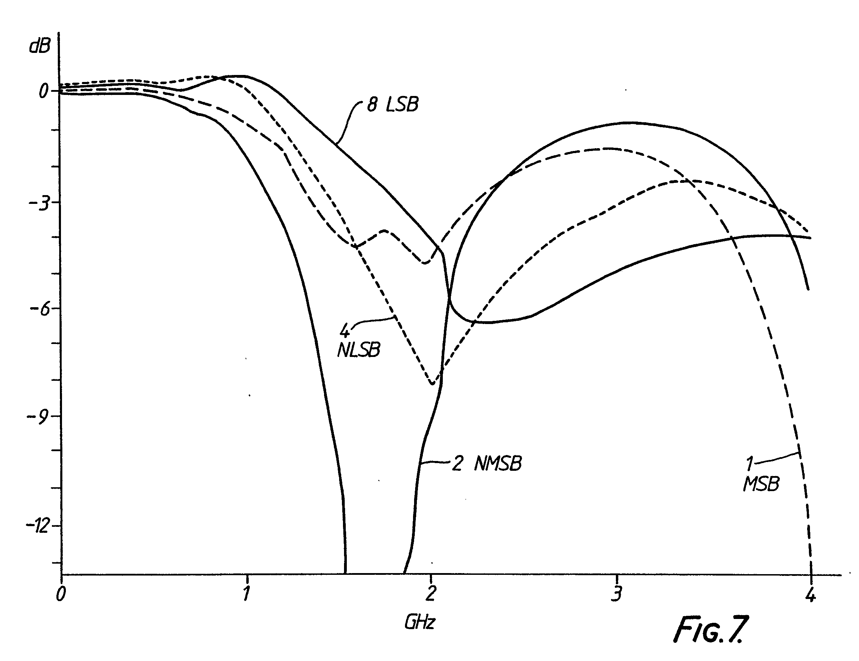

The invention will be described further, by way of example, with reference to Figures 4 to 8 of the accompanying drawings, in which:-

Figure 4 is a schematic diagram of an optical analogue-to-digital converter according to the present invention;

Figure 5 is a schematic representation of an "on-chip" form of the converter of Fig. 4;

Figure 6 is a graphical representation of a reconstructed Gray-Code output of the converter, at d.c.;

Figure 7 is a graph showing the small signal frequency response of the Next Most Significant Bit (NMSB) and Least Significant Bit (LSB) outputs of the converter, with its coplanar drive-line unterminated; and

Figure 8 is a sketch of one form of a crossover means used in the converter of Figure 4 and 5.

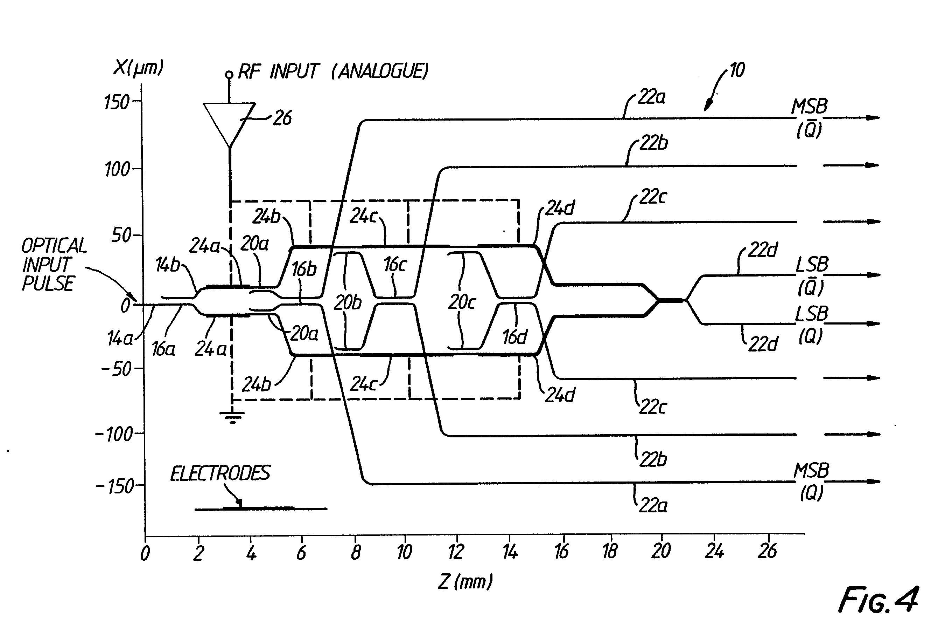

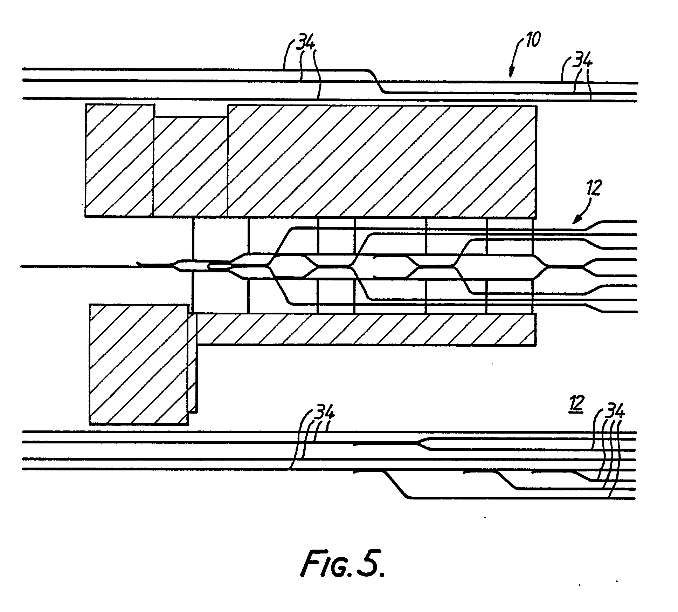

An electro-optical analogue-to-digital converter (ADC) 10 according to the present invention is illustrated in Figure 4. The conventional arrangement shown in Figure 2 is not optimal as the optical phase information to generate all outputs is already present in that interferometer with the longest electrode. Thus, all other interferometers can be dispensed with - they only add parasitic capacitance. The converter 10 comprises a substrate 12 (see Figure 5). Using GaAs/AlGaAs optical waveguide technology, a plurality of optical waveguides 14 are formed thereon. the waveguides 14 are coupled together to provide couplers, 16, splitters 18, taps 40, and outputs 22. Thus, one waveguide, the input waveguide, 14a is continuous across the converter. A second waveguide 14b is coupled to the guide 14a by a first coupler 16a. Downstream of the coupler 16a, each waveguide 14a, 14b has a respective pair of electrode plates 24a to which an analogue voltage to be converted from a Radio Frequency (RF) source 26 may be applied.

Each waveguide 14a, 14b is coupled, downstream of the plates 24a, by a respective tap coupler 20a to a respective output waveguide 22a. The output waveguides 22a are coupled by recombiner or coupler 16b.

The waveguides 14a and 14b then pas through respective second electrode plate pairs 24b of equal length to and electrically connected to the first pairs 24a and subject to the same analogue input from the source 26.

Downstream of the electrode pairs 24b, each waveguide 14a, 14b is coupled by a respective tap coupler 20b to a respective output waveguide 22b. As with the output waveguides 22a, the guides 22b are brought together in a recombiner or coupler 16c.

Electrode pairs 24c followed by tap couplers 20c provide output waveguides 22c, and electrode pairs 24 d followed by a recombiner or coupler 16e provides output waveguides 22d. The arrangement is symmetrical about the centre line of the converter.

In the present ADC (Figure 4 and 5), light is input to the waveguide 14a and is modulated by the electrode pairs 24a to generate the Most Significant Bit (MSB) tapped off using the tap couplers (20a) after one unit of electrode 24a length. Other outputs are generated similarly by subsequent optical taps 20b, 20c and 20d. The electrode segments pairs 24a, 24b, 24c and 24d are of length 1, 1, 2 and 4 units to give accumulated optical phase-shift equivalent to electrode lengths of 1, 2 (1 + 1), 4 (1 + 1 + 2) and 8(1 + 1 + 2 + 4) as required, with an overall length of, for example, 12mm. The width of the electrodes will be of the same order as that of the respective waveguides 14a, 14b, for example, $5\mu m$.

The optical tap-couplers 20a, 20b 20c and 20d are adjusted in length to tap off 1/8 of the total input light at each. In terms of the coupled-length ($L_0$) for total transfer of power the lengths are: Coupler (Splitter) $16a = L_0/2$; Tap $20a = L_0/3$; Tap $20b = L_0/2.552$; Tap $20c = L_0/2$. All recombiners (couplers) 16b, 16c, 16d, 16e are of length $L_0/2$.

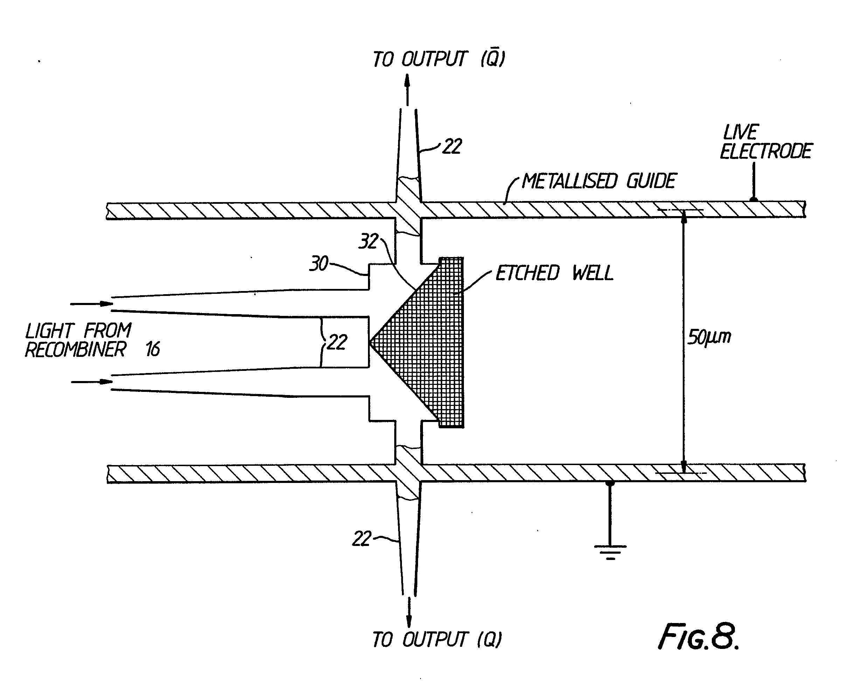

After recombination, the optical signals must be conveyed by the output waveguides 22 to the edge of the chip in such a way that all experience the same time delay. This requires guide cross-overs for all except the Least Significant Bit outputs. Figure 8 illustrates a means for securing 90° cross-overs (for minimum optical disturbance) using etched 45° reflectors. If curved waveguides are used, constraints of radius and waveguide separation limit the intersection angle to below 10°.

As can be seen from Figure 8, the output from each recombiner 16 is fed to an etched facet reflector 30 having two faces 32 forming total internal reflectors. The reflectors 30 enables the waveguides 22 to be turned through 90° and be brought out over other chip circuitry to the edge of the chip or to on-chip detectors (not shown).

Referring again to Figure 5, it will be seen that other, redundant, waveguides 34 are provided on the substrate 10. The purpose of the guides 34 is to enable fine tuning of the couplers and/or crossovers during fabrication. Thus critical lenghts can be monitored, during an etch process by monitoring light passing though guides 34 and terminating the etch when appropriate outputs are obtained.

An electro-optical analogue to digital converter according to the present invention has the following advantages:-

(i) Total electrode length is just that of the Least-Significant-Bit electrode in the conventional scheme (figure 2). Thus bandwidth is almost doubled.

(ii) Commonality of optical path reduces the required length of flawless waveguide and reduces the probability of ADC error due to optical phase drift.

(iii) The device is shorter and requires no separate splitter "tree"

(iv) The electrode layout is greatly simplified and (unlike that of figure 2) is amenable to travelling-wave drive for greatly enhanced bandwidth.

## Example

The waveguide technology used provided GaAs/AlGaAs (double heterostructure strip-loaded waveguides). The converter used a 1.5mm electrode length unit; thus the LSB electrode was 12mm long in total. Final chip-size of a cleaved out device is 21mm x 1mm which is short compared with a lithium niobate device of similar complexity.

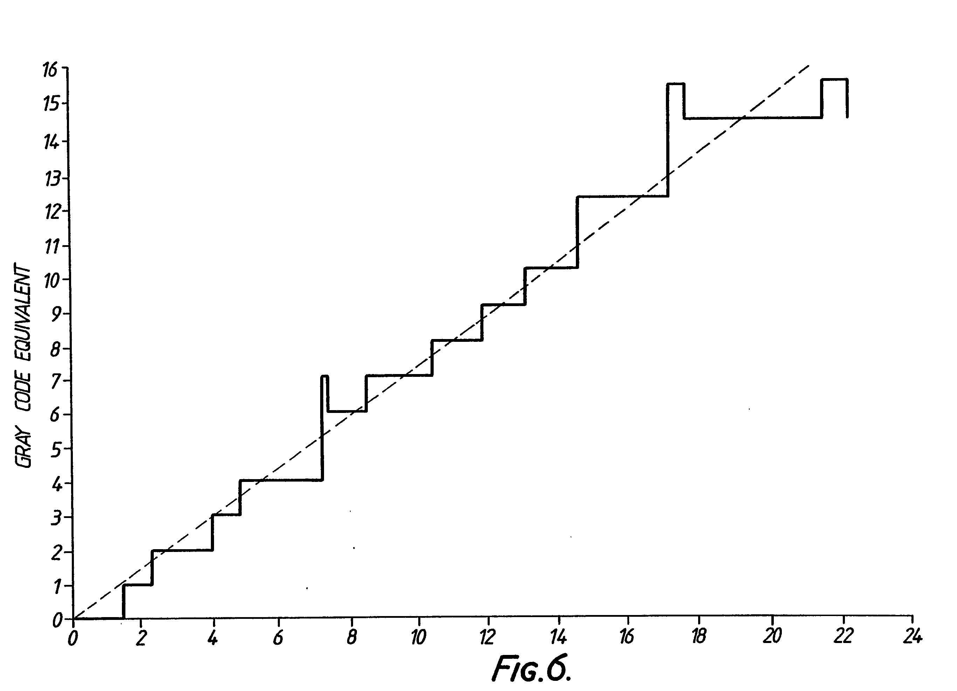

The full scale voltage was 22 volts at $1.15\mu m$ wavelength ($6^0V^{-1}$ $^1mm^{-1}$ phase/voltage slope). There was very little phase offset on any of the bit outputs and a full-scale voltage ramp could be reconstructed satisfactory from the Gray Code output (Figure 6) of the converter. Interbit crosstalk caused by stray light, was improved compared to a conventional device (Fig. 2) as, in that case, the MSB output was worst affected. This problem is thought to be largely due to scatter because tighter radius curves of the waveguides are necessary on the conventional device, which , on an E-beam mask used, were rough because of digitisation steps. Included test structures were well behaved. The directional couplers and splitter-tree were nearly lossless (<0.5dB down) compared with adjacent straight waveguides (<1dB/cm). The 7° crossovers introduced no measurable crosstalk or loss.

Small signal responses were measured up to 8GHz using an indirect swept frequency technique which does not require high speed detection of the RF modulation.

The converter 12 has an overall cut-off frequency (-3db) of about 1.0GHz, though each bit output was different in each case and in neither case was the simple lumped capacitance approach valid. The converter was limited in bandwidth by deep notches centred at 1.7GHz in the MSB and NMSB responses. Sweeps out to 8GHz revealed a periodic repetition of this notch which is clearly due to sampling of the electrical standing-wave on the open-ended coplanar line by the shortest, most localised electrodes.

Detailed modelling of this capacitively loaded line matches experiment well, provided that the unloaded microwave phase velocity is correctly chosen.

In this case, the fitting parameters suggest that the microwave and light wave are nearly velocity matched and that the attenuation is low.

In conclusion: 4-bit implementation of guideswave opticalADC's have been fabricated using GaAs/AlGaAs waveguide technology. The described Single, Tapped Mach Zehnder (STMZ) scheme has superior low and high frequency characteristics compared with the conventional Parallel-Mach-Zehnder approach. High frequency measurements indicate that this configuration will be suitable (as was expected) for travelling wave drive, giving very high bandwidths.

**Claims**

1. An optical analogue-to-digital converter comprising an optical waveguide Mach-Zehnder interferometer whereto optical pulses are fed, a pair of electrodes whereby an analogue signal may be applied across the waveguide, each electrode of the pair comprising a plurality of plate sections, the plate section of the electrode pair operating in pairs, of lengths varying according to binary series, and, for each pair of plates, at least an upstream and a downstream optical coupler permitting the input optical pulses to be split and then recombined and tapped, the tapped outputs corresponding to the bit order of the plates in the binary series.

2. A converter as claimed in claim 1 wherein a first waveguide provides a means of feeding optical pulses to the converter and also serves as an LSB output of the converter.

3. A converter as claimed in claim 2 wherein a second waveguide, coupled to the first waveguide provides a complementary LSB output of the converter.

4. A converter as claimed in claim 3 wherein a first pair of plate sections of unit length surround each of the first and second waveguide and tap coupler connects each waveguide to an output waveguide downstream of the first pair of plate sections.

5. A converter as claimed in claim 4 wherein the output waveguides pass through or recombiner or coupler before providing complementary MSB outputs of the converter.

6. A converter as claimed in claim 4 or 5 wherein, downstream of the tap couplers, a second pair of plate sections of unit length surrounds each of the first and second waveguides, and tap couplers connect each waveguide to second output waveguides downstream of the second pair of plate sections.

7. A converter as claimed in claim 6 wherein the second pair of output waveguides pass through a recombiner or coupler before providing NMSB outputs of the converter.

8. A converter as claimed any of claims 4 to 7 wherein a third pair of plate sections of twice unit length surround each of the first and second waveguides, on a tap coupler connector each waveguide to third output waveguides downstream of the third pair of plate sections.

9. A converter as claimed in claim 8 wherein the third output waveguides pass through a recombiner or coupler before providing complementary next bit outputs of the converter.

10. A converter as claimed in claim 3 wherein the first and second waveguides are brought together in a recombiner or coupler before providing the complementary LSB outputs of the converter.

11. A converter as claimed in claim 10 wherein, prior to the recombiner or coupler, the first and second waveguides pass between a final pair of plate sections of length equal to the sum of all preceding pairs of plate sections.

12. A converter as claimed in any preceding claim in which an output waveguide, carrying output signals, prior to crossing a waveguide carrying an LSB output, is turned through 90° to cross the LSB output waveguide.

13. A converter as claimed in claim 12 wherein the means for turning the waveguide comprises a 45° internal reflecting facet etched into the waveguide.

14. A converter as claimed in any preceding claim including redundant waveguides having couplers and cross-overs for enabling tuning of the converter during an etch stage of the manufacture thereof.

OPTICAL PHASE ⎱ INDUCED BY VOLTAGE
SHIFT - ΔΨ ⎰ ON ELECTRODE

ΔΨ

LIGHT
IN

INPUT
DIRECTIONAL
COUPLER

A

B

OUTPUT
DIRECTIONAL
COUPLER

*Fig.1(a)*
(PRIOR ART)

B (SINE - SQUARED)   A (COSINE - SQUARED)

OPTICAL
OUTPUT

0          π          2π

ΔΨ - RADIANS          *Fig.1(b)*

EP 0 319 286 A2

Neu eingereicht / Newly filed
Nouvellement déposé

AMPLIFIERS / DECISION GATES

LSB

NLSB

NMSB

MSB

DIGITAL OUTPUT

STROBE

DETECTORS

RF INPUT (ANALOGUE)

LSB

NLSB

NMSB

MSB

OPTICAL POWER SPLITTERS

OPTICAL INPUT PULSES

**FIG. 2.**
(PRIOR ART)

FIG.3.

FIG. 4

EP 0 319 286 A2

FIG.5.

FIG.6.

EP 0 319 286 A2

Fig.7.

TO OUTPUT (Q̄)

LIVE
ELECTRODE

22

METALLISED GUIDE

32

30

ETCHED WELL

22

LIGHT FROM
RECOMBINER 16

50μm

22

TO OUTPUT (Q)

FIG.8.

EP 0 319 286 A2